Europäisches Patentamt

(19) European Patent Office

Office européen des brevets

(11) Numéro de publication: **0 209 444**

**B1**

(12) **FASCICULE DE BREVET EUROPÉEN**

(45) Date de publication du fascicule du brevet:
12.10.88

(21) Numéro de dépôt: 86401484.0

(22) Date de dépôt: 03.07.86

(51) Int. Cl.⁴: **E 05 B 47/00**, F 16 B 5/10

(54) Ensemble de serrure de porte, notamment pour véhicule automobile.

(30) Priorité: 19.07.85 FR 8511115

(43) Date de publication de la demande:
21.01.87 Bulletin 87/4

(45) Mention de la délivrance du brevet:
12.10.88 Bulletin 88/41

(84) Etats contractants désignés:
DE GB IT SE

(56) Documents cité:
US-A-3 800 369

(73) Titulaire: ROCKWELL- CIM, 6, rue Barbès Boite Postale 70, F-92302 Levallois Cedex (FR)

(72) Inventeur: Grandjean, Richard, La Faing de Sainte- Marguerite, F-88105 Saint- Dié (FR)

(74) Mandataire: Bressand, Georges, c/o CABINET LAVOIX 2 Place d'Estienne d'Orves, F-75441 Paris Cedex 09 (FR)

LIBER, STOCKHOLM 1988

## Description

La présente invention se rapporte à un ensemble de serrure de porte, notamment de véhicule automobile, du type comportant un boîtier de serrure et un actionneur de condamnation.

Plus particulièrement, l'invention concerne la fixation de l'actionneur sur le boîtier de serrure.

Dans l'état de la technique l'actionneur de condamnation est fixé par une ou plusieurs vis auto-taraudeuses soit sur le panneau intérieur de la porte soit directement sur la platine de serrure par l'intermédiaire d'une ferrure, fixée sur celle-ci par soudage ou rivetage.

Ce type de fixations présente un certain nombre d'inconvénients, notamment au niveau du temps de montage d'un tel ensemble.

En effet, ce type de fixations impose l'utilisation d'outils par exemple pour le rivetage de la ferrure sur la platine de serrure et pour le vissage ou le dévissage des organes de fixation de l'actionneur sur celle-ci ou sur le panneau de porte.

Pour ces raisons, dans le cas d'un montage de l'actionneur sur la platine de serrure celui-ci est effectué chez le fabricant de serrure et non pas lors du montage de cet ensemble de serrure sur le véhicule, par le constructeur automobile.

Par contre, dans le cas d'un actionneur fixé directement sur le panneau intérieur de la porte, son montage est effectué par le constructeur automobile, mais son temps de montage vient s'ajouter à celui de la serrure elle-même.

Or, pour diverses raisons, il est intéressant que le montage de l'actionneur sur la serrure, puisse être effectué chez le constructeur automobile.

Le but de l'invention est de résoudre les problèmes évoqués précédemment en proposant un ensemble de serrure de porte avec actionneur dans lequel le boîtier de serrure et l'actionneur puissent être assemblés très rapidement sans l'aide d'outils annexes.

A cet effet, l'invention a pour objet un ensemble de serrure de porte, notamment de véhicule automobile, du type comprenant un boîtier de serrure et un actionneur de condamnation, caractérisé en ce que ledit boîtier et ledit actionneur comportent des moyens d'ancrage complémentaires pouvant occuper deux positions, l'une permettant la mise en place ou le retrait de l'actionneur sur ledit boîtier, et l'autre de retenue dudit actionneur sur ledit boîtier, et des moyens complémentaires de verrouillage à enclenchement élastique pour verrouiller lesdits moyens d'ancrage dans la position de retenue.

L'invention sera mieux comprise à l'aide de la description qui va suivre, donnée uniquement à titre d'exemple et faite en se référant aux dessins annexés, sur lesquels :

- la Fig 1 représente un ensemble de serrure de porte selon l'invention;
- la Fig. 2 représente une vue à échelle agrandie des moyens d'ancrage et des moyens de verrouillage à enclenchement élastique entrant dans la constitution d'un ensemble selon l'invention; et

- la Fig. 3 représente un ensemble de serrure de porte, dans laquelle un actionneur est representé en position d' introduction ou de retrait et en position de retenue sur un boîtier de serrure.

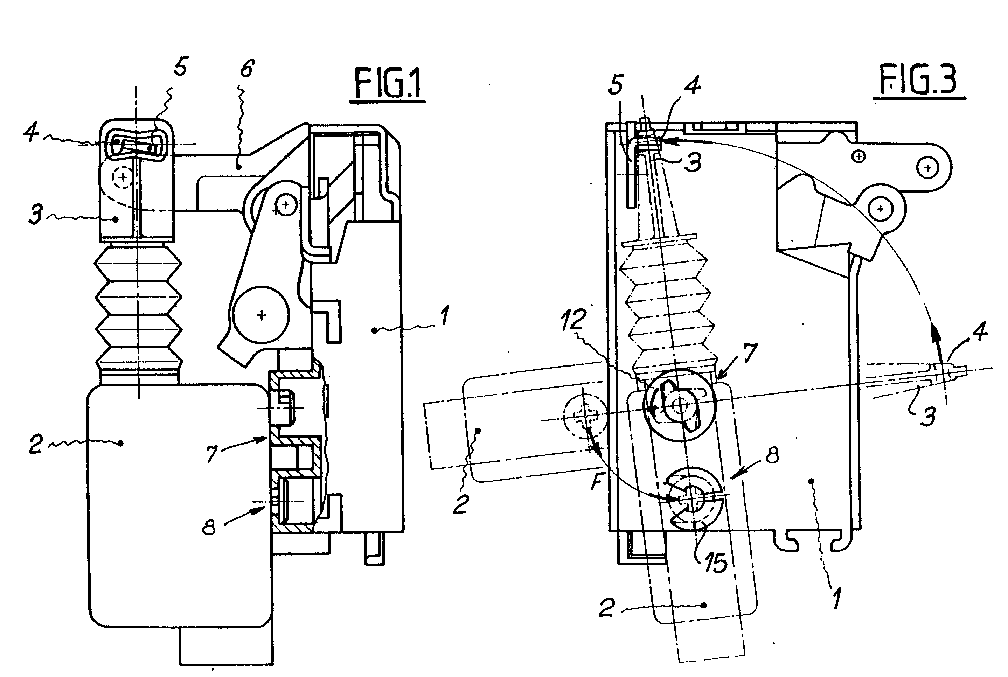

Ainsi qu'on peut le voir sur la Fig. 1, un ensemble de serrure de porte, notamment de véhicule automobile, comporte un boîtier de serrure 1 sur lequel est monté un actionneur de condamnation 2 comportant un chariot 3. Une extrémité de ce chariot comportant un évidement 4, est en prise avec une patte 5 d'un levier de renvoi 6 de condamnation de la serrure.

L'actionneur 2 est fixé sur le boîtier de serrure 1 par l'intermédiaire de moyens d'ancrage désignés de façon générale par la référence 7 et par des moyens de verrouillage à enclenchement élastique désignés de façon générale par la référence 8.

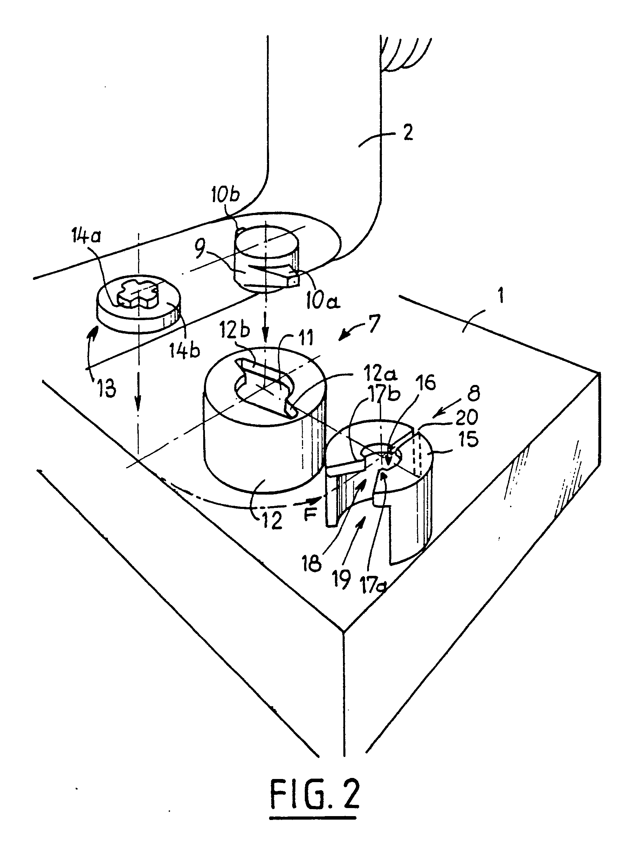

Comme on peut le voir plus particulièrement, sur la Fig. 2, les moyens d'ancrage 7 sont constitués par un premier téton 9 solidaire de l'actionneur 2, ce téton comportant des ailes 10a et 10b disposées de part et d'autre de celui-ci. Ce premier téton et ces ailes sont destinés à s'introduire dans un évidement 11 ménagé dans la paroi supérieure d'un premier bossage creux 12 solidaire du boîtier de serrure 1. Cet évidement 11 présente des dégagements 12a et 12b de forme complémentaire aux ailes 10a et 10b du téton 9 de façon à permettre son introduction dans l'évidement.

Les moyens de verrouillage à enclenchement élastique 8 comportent un second téton 13 solidaire de l'actionneur 2 et présentant une première partie 14a de section, avantageusement en croix, s'inscrivant dans un cercle et une seconde partie 14b se présentant sous la forme d'une rondelle pouvant avantageusement venir de matière avec la première partie. Ce téton 13 est destiné à venir s'engager dans un second bossage creux 15 du boîtier de serrure 1. Plus particulièrement, la partie 14a du téton 13 est destinée à s'introduire dans un évidement 16 ménagé à cet effet dans la paroi supérieure du bossage 15, cet évidement présentant des lèvres 17a et 17b séparées par une distance inférieure au diamètre de l'évidement 16 et donc du cercle dans lequel s'inscrit la section en croix de la partie 14a du téton 13, ces lèvres s'évasant vers la périphérie du bossage 15, de manière à constituer une première ouverture radiale 18 pour le passage de la partie 14a du téton 13.

La partie 14b de ce téton pénètre quant à elle à l'intérieur du bossage 15 par l'intermédiaire d'une seconde ouverture radiale 19 ménagée dans ce bossage au dessous de la première ouverture 18.

D'autre part, ce bossage 15 comporte une fente radiale 20 ménagée en regard de la première ouverture radiale 18, permettant de donner une certaine élasticité à la partie supérieure de ce bossage et permettant plus particulièrement aux lèvres 17a et 17b de s'écarter légèrement lors du passage de la partie 14a du téton 13 de façon à faciliter son introduction dans l'évidement 16.

La mise en place de l'actionneur se fait de la façon suivante (Fig. 2 et 3).

On présente l'actionneur 2 au-dessus du boîtier de serrure 1, le téton 9 au-dessus de l'ouverture 11 du bossage 12, de manière que les ailes 10a et 10b de celui-ci puissent s'introduire dans les dégagements 12a et 12b de ce bossage. L'actionneur est alors orienté sensiblement perpendiculairement à sa position finale ainsi qu'on peut le voir sur la Fig. 3. Le téton 9 est alors engagé dans le bossage 12 et on déplace angulairement l'actionneur dans le sens indiqué par la flèche F de sorte que les ailes 10a et 10b du téton 9, viennent coopérer avec les parties pleines du bossage 12, de façon à assurer l'ancrage de l'actionneur 2 sur le boîtier de serrure.

Si ce mouvement de pivotement se poursuit, les parties 14a et 14b du téton 13 s'engagent respectivement dans la première ouverture 18 et dans la seconde ouverture 19 du bossage 15, la partie 14a écartant les lèvres de la première ouverture de manière à s'introduire dans l'évidement 16. Ce pivotement amène également l'extrémité du chariot 3 et plus particulièrement l'évidement 4 ménagé dans celle-ci, à venir en prise avec la patte 5 du levier de renvoi de condamnation.

La mise en place de l'actionneur sur le boîtier de serrure se fait donc sans l'aide d'outils annexes. Cependant, le démontage de celui-ci nécessite l'intervention d'un outil tel que par exemple, un tournevis, qui est introduit dans la fente 20 du bossage 15 afin de l'ouvrir légèrement et d'écarter les lèvres 17a et 17b pour libérer le téton 13 solidaire de l'actionneur de sorte que l'on peut alors imprimer un mouvement de pivotement à l'actionneur, en sens inverse de celui du montage, pour amener les ailes 10a et 10b du téton 9 de l'actionneur à revenir en regard des dégagements 12a et 12b de l'évidement 11 du bossage 12 du boîtier de serrure et à permettre ainsi le retrait de l'actionneur.

Ceci permet le remplacement éventuel de l'actionneur tout en évitant un déverrouillage intempestif de celui-ci.

## Revendications

1. Ensemble de serrure de porte, notamment pour véhicule automobile du type comportant un boîtier de serrure (1) et un actionneur de condamnation (2), caractérisé en ce que ledit boîtier (1) et ledit actionneur (2) comportent des moyens d'ancrage complémentaires (7) pouvant occuper deux positions, l'une permettant la mise en place ou le retrait de l'actionneur sur ledit boîtier et l'autre de retenue dudit actionneur sur ledit boîtier et des moyens complémentaires de verrouillage (8) à enclenchement élastique pour verrouiller lesdits moyens d'ancrage dans la position de retenue.

2. Ensemble de serrure de porte, selon la revendication 1, caractérisé en ce que les moyens d'ancrage (7) sont déplaçables angulairement entre les deux positions.

3. Ensemble de serrure de porte, selon la revendication 1 ou 2, caractérisé en ce que les moyens d'ancrage sont constitués par un premier téton (9) solidaire dudit actionneur (2) et comportant des ailes (10a, 10b) et par un évidement (11) comportant des dégagements (12a, 12b) de forme complémentaire aux ailes dudit premier téton (9) ménagés dans la paroi supérieure d'un premier bossage (12) solidaire du boîtier de serrure (1).

4. Ensemble de serrure selon l'une quelconque des revendications précédentes, caractérisé en ce que les moyens de verrouillage sont constitués par un second téton (13) solidaire de l'actionneur (2) et par un second bossage (15), solidaire du boîtier de serrure, dans la paroi supérieure duquel est ménagé un évidement (16) de réception dudit second téton, cet évidement présentant une première ouverture radiale (18) pour le passage dudit second téton et des moyens de retenue de ce téton dans ledit évidement.

5. Ensemble de serrure selon la revendication 4, caractérisé en ce que ledit second téton (13) comporte une première partie (14a) présentant une section s'inscrivant dans un cercle et en ce que les moyens de retenue sont constitués par deux lèvres (17a, 17b) disposées de part et d'autre de ladite première ouverture radiale (18) et séparées d'une distance inférieure au diamètre dudit cercle dans lequel s'inscrit la section de la première partie du second téton (13).

6. Ensemble de serrure selon la revendication 5, caractérisé en ce que ladite première partie (14a) présente une section en croix.

7. Ensemble de serrure selon l'une quelconque des revendications 4, 5 ou 6, caractérisé en ce que le second bossage (15) comporte une fente radiale (20) ménagée en regard de la première ouverture radiale (18).

8. Ensemble de serrure selon l'une quelconque des revendications 5, 6 ou 7 caractérisé en ce que le second téton comporte une seconde partie (14b) se présentant sous la forme d'une rondelle solidaire de la première partie (14a), et destinée à s'engager dans le second bossage (15) par une seconde ouverture radiale (19) ménagée sous la première ouverture.

## Patentansprüche

1. Türschloßensemble, insbesondere für Kraftfahrzeuge, der Bauart mit einem Schloßgehäuse (1) und einem Blockierbetätiger (2),

dadurch gekennzeichnet,

daß besagtes Gehäuse (1) und besagter Betätiger (2) komplementäre Verankerungsmittel (7), die zwei Positionen einnehmen können, von denen die eine die Anbringung des Betätigers an besagtem Gehäuse oder seine Abnahme davon und die andere das Festhalten besagten Betätigers an besagtem Gehäuse gestatten, und komplementäre Verriegelungsmittel (8) mit elastischer Verrastung zum Verriegeln besagter Verankerungsmittel in deren Festhaltestellung aufweisen.

2. Ensemble nach Anspruch 1,

dadurch gekennzeichnet,

daß sich die Verankerungsmittel (7) zwischen den beiden Positionen im Winkel verstellen lassen.

3. Ensemble nach Anspruch 1 oder 2,

dadurch gekennzeichnet,

daß die Verankerungsmittel durch einen fest mit besagtem Betätiger (2) verbundenen ersten Zapfen (9) mit Flügeln (10a, 10b) und durch eine Ausnehmung (11) gebildet sind, die Ausläufer (12a, 12b) von zu den Flügeln besagten ersten Zapfens (9) komplementärer Form aufweist, die in die obere Wand eines fest mit dem Schloßgehäuse (1) verbundenen ersten Höckers (12) eingearbeitet sind.

4. Ensemble nach einem der vorangehenden Ansprüche,

dadurch gekennzeichnet,

daß die Verriegelungsmittel durch einen fest mit dem Betätiger (2) verbundenen zweiten Zapfen (13) und durch einen fest mit dem Schloßgehäuse verbundenen zweiten Höcker (15) gebildet sind, in dessen obere Wand eine Ausnehmung (16) für die Aufnahme besagten zweiten Zapfens eingearbeitet ist, die eine erste radiale Öffnung (18) für den Durchgang besagten zweiten Zapfens und Mittel zum Festhalten dieses Zapfens in besagter Aufnehmung aufweist.

5. Ensemble nach Anspruch 4,

dadurch gekennzeichnet,

daß besagter zweiter Zapfen (13) einen ersten Abschnitt (14a) mit einem Querschnitt aufweist, der sich in einen Kreis einschreibt, und daß die Festhaltemittel durch zwei Lippen (17a, 17b) gebildet sind, die zu beiden Seiten besagter erster radialer Öffnung (18) angeordnet und durch einen Abstand getrennt sind, der kleiner ist als besagter Kreis, in dem der Querschnitt des ersten Abschnitts des zweiten Zapfens (13) eingeschrieben ist.

6.Ensemble nach Anspruch 5,

dadurch gekennzeichnet,

daß besagter erster Abschnitt (14a) einen kreuzförmigen Querschnitt aufweist.

7. Ensemble nach einem der Ansprüche 4, 5 oder 6,

dadurch gekennzeichnet,

daß der zweite Höcker (15) einen radialen Schlitz (20) aufweist, der darin gegenüber der ersten radialen Öffnung (18) eingearbeitet ist.

8. Ensemble nach einem der Ansprüche 5, 6 oder 7,

dadurch gekennzeichnet,

daß der zweite Zapfen einen zweiten Abschnitt (14b) aufweist, der die Form einer fest mit dem ersten Abschnitt (14a) verbundenen Scheibe hat und dazu bestimmt ist, sich in den zweiten Höcker (15) durch eine unter der ersten Öffnung eingearbeitete zweite radiale Öffnung (19) hindurch einzuschieben.

**Claims**

1. A door lock assembly, more particularly for an automotive vehicle, of the kind comprising a lock casing (1) and a locking actuator (2), characterized in that the casing (1) and the actuator (2) comprise complementary anchoring means (7) which can occupy two positions, one position allowing the placing in position or withdrawal of the actuator in relation to the casing and the other allowing the retention of the actuator on the casing, complementary resiliently engaging locking means (8) being provided to lock the anchoring means in the retaining position.

2. A door lock assembly according to claim 1, characterized in that the anchoring means (7) can be moved angularly between the two positions.

3. A door lock assembly according to claims 1 or 2, characterized in that the anchoring means are formed by a first stud (9) integral with the actuator (2) and comprising wings (10a, 10b) and by a cavity (11) comprising recesses (12a, 12b) having a shape complementary to the wings of the first stud (9) and formed in the upper wall of a first boss (12) integral with the lock casing (1).

4. A lock assembly according to any of the preceding claims, characterized in that the locking means are formed by a second stud (13) integral with the actuator (2) and by a second boss (15) integral with the lock casing, the upper wall of such boss being formed with a cavity (16) receiving the second stud, the cavity having a first radial opening (18) through which the second stud extends and means for retaining such stud in the cavity.

5. A lock assembly according to claim 4, characterized in that the second stud (13) comprises a first portion (14a) having a section inscribed in a circle, the retaining means being formed by two lips (17a, 17b) disposed on each side of such first radial opening (18) and separated by a distance smaller than the diameter of the circle in which the section of the first portion of the second stud (13) is inscribed.

6. A lock assembly according to claim 5, characterized in that the first portion (14a) has a cruciform section.

7. A lock assembly according to any of claims 4, 5 or 6, characterized in that the second boss (15) comprises a radial slot (20) disposed facing the first radial opening (18).

8. A lock assembly according to any of claims 5, 6 or 7, characterized in that the second stud comprises a second portion (14b) taking the form of a washer integral with the first portion (14a) and adapted to engage in the second boss (15) via a second radial opening (19) provided beneath the first opening.

FIG.3

FIG.1

FIG. 2